# EUROPEAN PATENT APPLICATION

(11) **EP 4 390 531 A1**
(43) Date of publication of application: **26.06.2024**
(21) Application number: 22215361.1
(22) Date of filing: 21.12.2022
(51) Int. Cl.: G02F 1/35, G02F 1/365

(54) **A SUPERCONTINUUM LIGHT SOURCE**

(71) Applicant: NKT Photonics A/S, 3460 Birkerød (DK)
(72) Inventor: ANDERSEN, Thomas Vestergaard, 3460 Birkerød (DK)
(74) Representative: Zacco Denmark A/S

(57) **Abstract**

A supercontinuum light source comprising at least a first type of channel and a second type of channel, a beam combiner, and a multimode fiber is disclosed. The first type of channel is configured to generate light having a first spectral distribution. The second type of channel is configured to generate light having a second spectral distribution comprising light in the ultraviolet range. The second spectral distribution has a higher power spectral density at least over part of the ultraviolet spectral range than the first spectral distribution. The beam combiner is configured to couple the light generated in the channels into the multimode fiber.

## Description

### TECHNICAL FIELD

The invention relates to the technical field of a supercontinuum light source comprising light in the ultraviolet range.

### BACKGROUND

In some industrial applications, for example in semiconductor industry, several optical sources operating in different spectral ranges are used to carry out one or more tasks. The provision of several light sources may be costly and may require a complicated setup. Supercontinuum generation is one way of replacing multiple light sources and may find use in numerous applications such as spectroscopy or quality control. Spectral slicing of a generated supercontinuum is an elegant way of replacing multiple light sources having separate wavelengths.

It is an object of the present invention to provide one light source covering an ultra-broad spectral range extending over multiple wavelength ranges.

### SUMMARY OF THE INVENTION

The object is satisfied by a supercontinuum light source in accordance with claim 1. Preferred embodiments of the invention are described in the dependent claims.

In a first aspect, a supercontinuum light source comprising at least a first type of channel and a second type of channel, a beam combiner, and a multimode fiber is disclosed. The first type of channel is configured to generate light having a first spectral distribution. The second type of channel is configured to generate light having a second spectral distribution comprising light in the ultraviolet range. The second spectral distribution has a higher power spectral density at least over part of the ultraviolet spectral range than the first spectral distribution. The beam combiner is configured to couple the light generated in the channels into the multimode fiber.

The supercontinuum light source may be an optical pulsed source. In the present context, the supercontinuum light source may be a source comprising wavelengths spanning over more than 300 nm. The wavelengths may span over different spectral ranges such as ultraviolet (UV), visible, infrared (IR), etc. The supercontinuum light source may be substantially flat in terms of spectral distribution over at least a part of the entire supercontinuum.

The first type of channel may comprise a light source, such as a first light source, such as a first pulsed source. The first type of channel may comprise an optical path, such as a first optical path. The first type of channel may be configured to generate light having a first spectral distribution in response to a pump pulse propagating along the first optical path of the first type of channel. The generated light may be a pulsed light.

The second type of channel may comprise a light source, such as a second light source, such as a second pulsed source, such as a second pump pulse source. The first light source and the second light source may be the same. The second type of channel may comprise an optical path, such as a second optical path. The second type of channel may be configured to generate light having a second spectral distribution in response to a pump pulse propagating along the second optical path of the second type of channel. The first optical path may be different from the second optical path. The generated light may be a pulsed light.

The beam combiner may be an optical element configured to have a flat frequency response over the entire supercontinuum. In particular, the beam combiner may have a flat frequency response over the first spectral distribution and the second spectral distribution. The beam combiner may have an input end configured to receive the light generated in the first type of channel and in the second type of channel. The beam combiner may have an output end configured to output combined light from the channels and deliver it to the multimode fiber.

The multimode fiber may be multimode and have a flat frequency response over the entire supercontinuum. In particular, the multimode fiber may have a flat frequency response over the first spectral distribution and the second spectral distribution. The multimode fiber may comprise an input side configured to receive combined light from the beam combiner and an output side configured to deliver the combined light for further use.

The first spectral distribution may have a higher power spectral density at least over part of the visible spectral range (380 nm up to 700 nm) than the second spectral distribution. The first spectral distribution may also comprise spectral components from other spectral ranges, such as UV range, IR range, etc. The first spectral distribution may include a first supercontinuum comprising at least frequencies in the visible spectral range and optionally extending beyond the visible spectral range. The first type of channel may be configured to provide light pulses in the visible spectral range. The first spectral distribution may comprise spectral components that are different from the spectral components comprised in the second spectral distribution. In other words, the second spectral distribution may differ from the first spectral distribution.

The second spectral distribution may predominantly comprise spectral components from the UV spectral range, such as a 5 nm, 10 nm, 20 nm, or 40 nm wide spectral distribution containing wavelengths from 240 nm up to 400 nm. A blue edge of the second spectral distribution may be blue-shifted by at least 5 nm, such as by at least 10 nm, such as by at least 20 nm relative to a blue edge of the first spectral distribution. The second spectral distribution may be at least 5 nm wide, such as at least 10 nm wide, such as at least 20 nm wide, such as at least 40 nm wide. The first spectral distributions may comprise light in the visible spectral range and the second spectral distributions may comprise light in the UV spectral range.

The second type of channel may comprise light pulses comprising spectral components in the UV range. The second spectral distribution may include a second supercontinuum comprising at least frequencies in the UV spectral range and optionally extending beyond the UV spectral range. In some examples, two or more of the second type of channels provide second spectral distributions covering different parts of the ultraviolet spectral range.

The first spectral distribution may have at least some spectral components which are different from the spectral components of the second spectral distribution. The first spectral distribution may also have the same spectral components as the second spectral distribution. According to the present disclosure, the second spectral distribution has a higher power spectral density at least over part of the ultraviolet spectral range than the first spectral distribution. In other words, at least some of the UV spectral components of the second type of channel have a higher power than the same spectral components of the first type of channel. Thereby it is ensured that the resulting combined supercontinuum is extending over a larger part of the UV spectral range and further comprises spectral components outside of the UV spectral range compared to a supercontinuum generated in the first type of channel alone.

The supercontinuum light source may comprise one or more pump pulse sources, e.g. pulsed lasers configured to generate pump pulses. The first type of channel may then be configured to generate, in response to a first group of pump pulses propagating along a first optical path of the first type of channel, light having the first spectral distribution. The second type of channel may then be configured to generate light having a second spectral distribution in response to a second group of pump pulses propagating along a second optical path of the second type of channel. The second spectral distribution has a higher spectral density in the ultraviolet spectral range than the first spectral distribution. The beam combiner is configured to combine the light generated in the channels to form a combined supercontinuum. A multimode optical output fiber supporting a plurality of spatial modes at one or more wavelengths of the combined supercontinuum may be arranged to receive the combined supercontinuum from the beam combiner. The supercontinuum may have valleys, peaks and holes in the spectrum. In this context spanning is taken to mean that the spectral power is more than -20 dB/nm relative to the mean optical power of the output light, such as more than -10 dB/nm, such as more than -5 dB/nm, such as more than -3 dB/nm, such as more -2 dB/nm in more than 50% of the span, such as in more than 75% of the span, such as in more than 85% of the span, such as in more than 95% of the span.

By providing a light source that combines spectral components from the UV spectral range and spectral components from another spectral range, preferably a neighboring spectral range, a supercontinuum is obtained thereby simplifying various applications in which multiple light sources are used.

In some embodiments, the supercontinuum light source comprises two or more channels of the second type. The two or more channels of the second type may comprise substantially the same spectral components having substantially the same spectral density. Alternatively, the two or more channels of the second type may comprise substantially the same spectral components having complementary power spectrum to thereby provide a substantially flat spectral distribution in particular in the UV spectral range. By multiplying channels of the same type quality of the output signal can be improved.

In some embodiments, the supercontinuum light source may comprise two or more channels of the first type, each channel comprising a specific power spectrum in a first spectral range to thereby result in a substantially flat spectral distribution in the first spectral range.

In some embodiments, the first spectral distribution comprises light in the visible spectral range. In particular, the first spectral distribution may comprise light with a power spectral density that is above 1 mW/nm over at least a part of the visible spectral range. In some embodiments, the first type of channel is configured to emit light in the mid-infrared range and not necessarily containing light in the visible range. By providing at least some power in the visible spectral range it is ensured that the supercontinuum light source comprises visible light in addition to the UV light.

In some embodiments, the second spectral distribution has a power spectral density above 0.01 mW/nm, such as above 0.1 mW/nm, such as 0.5 mW/nm at least over part of the ultraviolet spectral range. Such power density is sufficient to provide good signal-to-noise ratio in the supercontinuum.

In some embodiments, the supercontinuum light source comprises at least a third type of channel being configured to generate light having a third spectral distribution. The third spectral distribution is generated in response to a pump pulse propagating along a third optical path of the third type of channel. A red edge of the third spectral distribution may be red-shifted by at least 50 nm, such as at least 100 nm, such as at least 500 nm, such as at least 1000 nm relative to a red edge of the first spectral distribution. The third type of channel may have a spectral width of at least 500 nm. The third type of channel may be a fiber-based channel, i.e. may include one or more fibers guiding light towards the beam combiner. The third spectral distribution may differ from the first spectral distribution and from the second spectral distribution. The third spectral distribution may comprise spectral components which overlap with the spectral components of the first or the second spectral distribution. By having the third type of channel with the third spectral distribution different from the first/second spectral distribution, such as extending to wavelengths above the red edge of the first spectral distribution, a spectral width of the supercontinuum is extended towards longer wavelengths.

In some embodiments, the third spectral distribution comprises light in the infrared range. The third spectral distribution covers at least part of the infra-red spectral range, such as wavelengths from around 700 nm up to at least 1500 nm. A red edge of the third spectral distribution may be at a wavelength above 2 µm, such as at a wavelength above 3 µm, such as at a wavelength above 4 µm. Light of the third spectral distribution may have a power spectral density above 0.1 mW/nm at least over part of the infrared spectral range, such as at least 0.5 mW/nm at least over part of the IR spectral range. A total optical power in the IR spectral range may be at least 100 mW.

In some embodiments, the supercontinuum light source comprises a pump source. At least one of the optical paths may comprise a pump source. The pump source may be a continuous wave (CW) laser or may be a pulsed pump source, such as a pulsed diode laser or a mode-locked laser, configured to provide pump beam for at least one of the channels, i.e. the pump source may provide either CW beam or pulses to the first and/or second and/or third type of channel. There may be one or more pump sources comprised in the supercontinuum light source. In some embodiments each channel may have its own pump source. Alternatively, there may be one pump source that is shared between two or more channels. The corresponding channel may then be configured to receive the pump pulses or CWfrom the pump source. Having a pump source that can be shared between the channels is beneficial as it may simplify the entire setup of the supercontinuum light source. Also, having multiple pump sources, some of which are used for individual channels and some of which are shared between individual channels may also be beneficial as it adds flexibility and better tunability of the system.

In some embodiments, at least one of the channels comprises a pump sources. One of the channels may comprise a first pump sources, such as a laser providing an output with a first central wavelength in the near infrared spectral region, such as in the range of 1030 nm to 1070 nm. Other channels may comprise one or more pump sources which may be different from the first pump source, i.e. their central wavelength may be different from the first central wavelength.

In some embodiments, different pump pulses propagate along the first and second optical paths. In some embodiments, identical seed pump pulses propagate along the first and second optical paths.

In some embodiments, at least one channel comprises an amplifier for generating amplified pulses. The amplifier receives the pump pulses from the pump pulse source, amplifies them and output the amplified pulses to nonlinear elements of the channels such that the spectral distributions can be generated. In some embodiments, each type of channel may have a separate amplifier. In this way, power level, and to some extent the spectral distribution profile, of individual channel types can be controlled. The amplifier may be an optical fiber amplifier. The optical fiber amplifier may have two or more stages of optical amplifiers cascaded to incrementally provide gain to the optical signal. The output of the optical fiber amplifier may comprise a large mode area single mode fiber.

The supercontinuum light source may comprise one or more optical amplifiers arranged to receive and amplify pump pulses provided by the one or more pump pulse sources. At least one of the optical paths may comprise an amplifier arranged to receive and amplify pump pulses. In some examples, all optical paths or channels may comprise an amplifier.

In some embodiments, at least one channel comprises a nonlinear element. The nonlinear element may be a nonlinear optical fiber for generating light with a broadband spectral distribution. The nonlinear optical fiber may receive the amplified pulses from the amplifier and in response to the amplified pump pulses propagating along the channel generate light with a broadband spectral distribution. The amplified pulses have high peak power in order to excite nonlinearities in the nonlinear element to generate a broadband spectral distribution covering e.g. the entire visible spectral range. The nonlinear element may output generated light with the broadband spectral distribution to the beam combiner. In the present context, the term broadband may refer to a spectrum having a spectral width of at least 50 nm.

At least one of the channels of the supercontinuum light source may comprise a nonlinear optical element, such as a nonlinear optical fiber or a nonlinear optical crystal, configured to generate light having a spectral distribution in response to a pump pulse propagating through the nonlinear element.. The first and second types of channels may comprise different nonlinear optical elements. These different nonlinear optical elements may generate different broadband spectral ranges. The generated spectral ranges may differ in at least a part of spectral components. The first and third types of channels may comprise different nonlinear optical elements generating different broadband spectral ranges. Nonlinear elements in each of the channel types may be different from each other.

In some embodiments, the first type of channel comprises a first nonlinear optical element, such as a first nonlinear optical fiber, configured to generate the light having a first spectral distribution in response to a pump pulse propagating through the first nonlinear element.

In some embodiments, the second type of channel comprises a second non-linear optical element, such as a second nonlinear optical fiber or nonlinear optical crystal, configured to generate the light having a second spectral distribution in response to a pump pulse propagating through the second nonlinear element.

In some embodiments, the second nonlinear optical element is configured to generate broadband light covering wavelengths in the visible and/or infrared spectral range in response to an amplified pump pulse propagating along the second optical path. The broadband light covering wavelengths in the visible and/or infrared spectral range may then be frequency up-converted into the ultraviolet range.

The first/second nonlinear optical element, such as first/second nonlinear fiber, may be arranged along or at least partly defining the first/second optical path.

In some embodiments, the beam combiner comprises at least one lens or a bundle of fibers.

At least one of the optical paths may output a beam into free space. The beam propagating into free space may then be received by the lens (or a set of lenses). The lens may be a passive component configured to collect all the light propagating along the optical paths and further configured to focus the combined light into the multimode fiber. The light may be focused into the multimode fiber by one or more lenses. The one or more lenses may include double-convex lenses, plano-convex, double-concave, plano-concave, etc. The lens may be transparent to all the wavelength components comprised in the incoming channels.

The bundle of fibers may be used if the channels are fiber channels. All the incoming channels may then be bundled together and spliced into the bundle. The bundle of fibers may comprise an output with a multimode connector, adapted to be connected to the multimode fibers. Alternatively, the bundle of fibers may be directly spliced to the multimode fiber. It is beneficial to use a lens (or a combination or lenses) or a bundle of fibers as such combiners can provide a substantially flat frequency response over the entire supercontinuum.

In some embodiments, the at least one lens is configured to receive the output light from one or more and preferably from all channels and further configured to couple the received output light into the multimode fiber. In other words, the at least one lens is configured to receive the output light from one or more and preferably from all optical paths. Typically, all the channels will either be fully fiber-based and connecting to the bundle of fibers or partly fiber-based, ending in free-space and being coupled into the multimode fiber by the lens or a set of lenses.

In some embodiments, the bundle of fibers is configured to receive the output light from the channels, i.e. from the optical paths, and further configured to couple the received light into the multimode fiber.

In some embodiments, at least one of the second type of channels comprises a second or higher harmonic generation component configured for generating light in the ultra-violet range by frequency up-conversion of light in the visible and/or infrared range. The second or higher harmonic generation component may comprise a crystal in free-space. The at least one of the second type of channel may output a beam into free-space. The beam may be guided to and preferably focused onto the crystal. In these embodiments, the second type of channels may also comprise a pump pulse source, an amplifier, and a nonlinear fiber configured to generate broadband light in the visible and/or infrared spectral range. This broadband light is then sent to the second (or higher) harmonic generation component which will then convert the received broadband light into the second spectral distribution. The second harmonic generation component may be configured to frequency double spectral range 780-820nm to a lower spectral range covering wavelengths from 390 nm to 410 nm.

In some embodiments, at least the second optical path comprises the second (or higher) harmonic generation component. The optical path may output a beam into free-space. The beam is guided onto the crystal. In some examples, the nonlinear crystal is selected from the group of BBO (β-barium borate), KDP (potassium dihydrogen phosphate), KTP (potassium titanyl phosphate), and lithium niobate.

In some embodiments, the supercontinuum light source is configured to output a combined supercontinuum from the multimode fiber with a spectrum extending from 380 nm to 2500 nm, such as with a spectrum extending from 380 nm to 740 nm, such as with a spectrum extending from 390 nm to 2300 nm, such as with a spectrum extending from 410 nm to 2400 nm, such as with a spectrum extending from 450 nm to 2300 nm, such as with a spectrum extending from 500 nm to 2400 nm. Such broad supercontinuum can be achieved by combining two or more types of channel.

In some embodiments, a spectrum of the combined supercontinuum output by the supercontinuum light source has a spectral width of at least 300 nm, such as at least 400 nm, such as at least 600 nm, such as at least 800 nm, such as at least 1000 nm, such as at least 1300 nm, such as at least 1600 nm, such as at least 2000 nm. The beam combiner and the multimode fiber may have a substantially flat frequency response over the entire spectral width of the supercontinuum. The spectrum is output by the multimode fiber. The spectral width of the spectrum can be defined as a wavelength range where the spectral power of the supercontinuum light source is more than -5 dB/nm relative to a mean optical power of the light output from the super continuum light source in more than 50% of the wavelength range

In some embodiments, the light provided by different channels comprises overlapping spectral components. The first and second spectral distributions may comprise overlapping spectral components. The first and third spectral distributions may comprise overlapping spectral components.

In some embodiments, each channel is arranged to provide light in a specific wavelength region and/or at a specific intensity. In some examples, each optical path provides light in a specific wavelength range and/or at a specific intensity. As each optical path may comprise separate amplifiers, the intensity of light at the output of the amplifiers may be individually controlled and thus be different for each optical path. Also, as each optical path may comprise separate nonlinear element, the wavelength range of light at the output of the nonlinear elements may be individually controlled and thus be different for each optical path. Thus, each channel, or each optical path may be individually tunable in terms of power and spectral width and profile. Furthermore, as both amplification and a selection of nonlinear elements can be controlled, it is possible to adjust spectral power density on each optical path. It is beneficial to have spectral range, power, and spectral power density being tunable as it allows for generation of a substantially flat supercontinuum.

In some embodiments, the supercontinuum light source may comprise at least a fourth type of channel being configured to generate light having a fourth spectral distribution. The third spectral distribution typically differs from the first spectral distribution and from the second spectral distribution. The fourth spectral distribution may cover the wavelength range from 1500 nm up to 2500 nm. The fourth and third spectral distributions may comprise overlapping spectral components. By providing at least some power in the higher infrared spectral range it is ensured that the supercontinuum light source comprises additional infrared light in addition to the visible and UV light.

In some embodiments, a blue edge of the second spectral distribution is blue-shifted by at least 5 nm, such as at least 10 nm, such as at least 20 nm relative to a blue edge of the first spectral distribution.

In some embodiments, the supercontinuum light source comprises a control system configured to control the operation of the pump pulse sources and/or the optical amplifiers to thereby control the pump pulses received by at least one of the nonlinear elements. In this way, a control over the spectral distribution of the light generated in the nonlinear element is achieved. The control system may control output power of one or more pump pulse sources and/or it may control central wavelength of the pump pulse sources, given that these are wavelength-tunable. The control system may further control output power of one or more amplifiers arranged along the optical paths. Different power levels will cause different nonlinear reactions in the nonlinear elements and thereby the spectral distributions of light at the output of the nonlinear components can be obtained. By providing a control system for control of pump pulse sources and/or amplifiers, desired supercontinuum can be obtained. The spectral width as well as the spectral power density can be controlled.

In some examples, the supercontinuum light source comprises at least a fourth type of channel being configured to generate light having a fourth spectral distribution, where the fourth spectral distribution differs from the first, second and third spectral distribution.

In some examples, the supercontinuum light source comprises at least a fifth type of channel being configured to generate light having a fifth spectral distribution, where the fifth spectral distribution differs from the first, second, third and fourth spectral distribution.

In some examples the first, third, fourth and fifth spectral distributions all contain light in the visible and/or infrared range.

### Examples

To obtain the supercontinuum from the supercontinuum light source three different spectra from various supercontinuum spectra (spectra of SuperK EXU, EXW and EXR supercontinuum lasers provided by NKT Photonics A/S Denmark) can be used. Spectra of SuperK EXU, EXW and EXR can be obtained using different nonlinear fibers, amplifiers and pump source parameters. A supercontinuum light source according to an embodiment having three different first type of channels based on the nonlinear fiber, amplifier and pump source parameters of the SuperK EXU, EXW and EER sources, potentially combined with further versions of a first type of channel, can provide a relatively smooth supercontinuum in the visible and near infrared range. Combining with, e.g., four different or identical second type of channel can increase the power spectral density of the supercontinuum in the wavelength range around and below the blue edge of the EXU at 390 nm.

Each second type of channel may have a pump source, an amplifier and a shorter section of the nonlinear fiber used in the EXU first type of channel such that the formed broadband signal has a higher power spectral density (e.g. 6 mW/nm) in a wavelength range around of 780 nm to 820 nm. With frequency up-conversion in a crystal optimized for up-conversion around 800 nm, a second spectral distribution with a relatively strong signal in the wavelength range of 390 nm to 400 nm can be generated. If the crystal is optimized for up-conversion into the ultraviolet range below 390 nm, the resulting combined supercontinuum has a blue edge which is blue shifted relative to the blue edge of the EXU spectrum. The up-conversion into different parts of the ultraviolet wavelength range can be provided by arranging the crystals at different angles relative to the optical beams of the different second type of channels.

If the four second type of channels are identical a relatively stronger contribution is made to the power spectral density in a relatively narrow wavelength range, e.g. a wavelength range about 10 nm wide. If the four different second type of channel are different the contribution to the power spectral density can be made over a relatively wider wavelength range, e.g. over 40 nm, but with a relatively weaker contribution. Combining four different second type of channels together can extend the combined supercontinuum down to 350 nm.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Preferred embodiments of the present invention will now be described by way of example only and with reference to the accompanying drawings in which:
Fig. 1 shows an exemplary embodiment of a supercontinuum light source according to the present disclosure.
Fig. 2 shows another exemplary embodiment of a supercontinuum light source according to the present disclosure.
Fig. 3 shows yet another exemplary embodiment of a supercontinuum light source according to the present disclosure.
Fig. 4 shows one exemplary implementation of the supercontinuum light source of Fig. 1.
Fig. 5 shows detailed implementation of the supercontinuum light source of Fig. 1. according to one example of the present disclosure.
Fig. 6 shows an exemplary embodiment of the generated supercontinuum according to one example of the present disclosure.
Fig. 7 shows an exemplary embodiment of the generated supercontinuum according to another example of the present disclosure.

### DETAILED DESCRIPTION

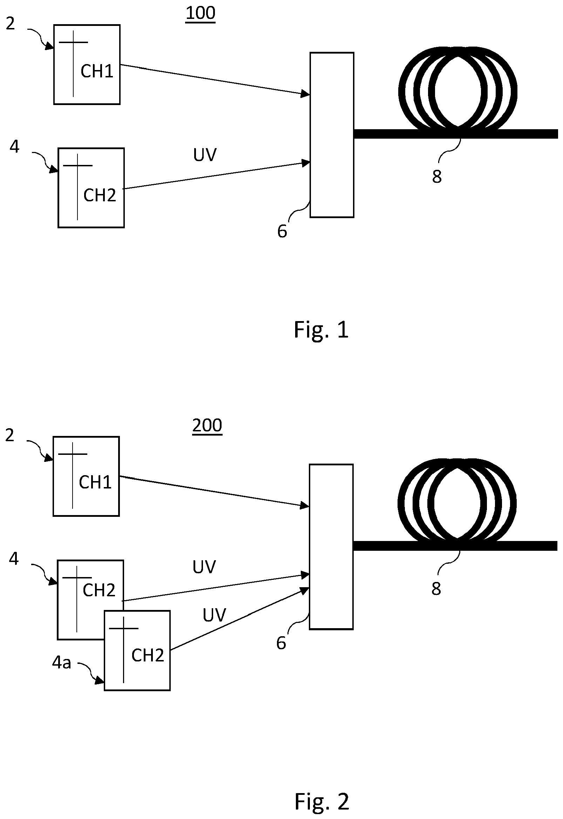

Fig. 1 shows exemplary embodiment of a supercontinuum light source 100 according to the present disclosure. The supercontinuum light source 100 comprises at least a first type of channel 2 and a second type of channel 4, a beam combiner 6, and a multimode fiber 8. The first type of channel 2 is configured to generate light having a first spectral distribution. The second type of channel 4 is configured to generate light having a second spectral distribution comprising light in the ultraviolet range. The second spectral distribution has a higher power spectral density at least over part of the ultraviolet spectral range than the first spectral distribution. The beam combiner 6 is configured to couple the light generated in the channels 2 and 4 into the multimode fiber 8.

Fig. 2 shows another exemplary embodiment of a supercontinuum light source 200 according to the present disclosure. The supercontinuum light source 200 comprises all the features as disclosed in Fig. 1 but comprises two channels of the second type, 4 and 4a. The supercontinuum source may comprise more than two channels of the second type and also more than one channel of the first type.

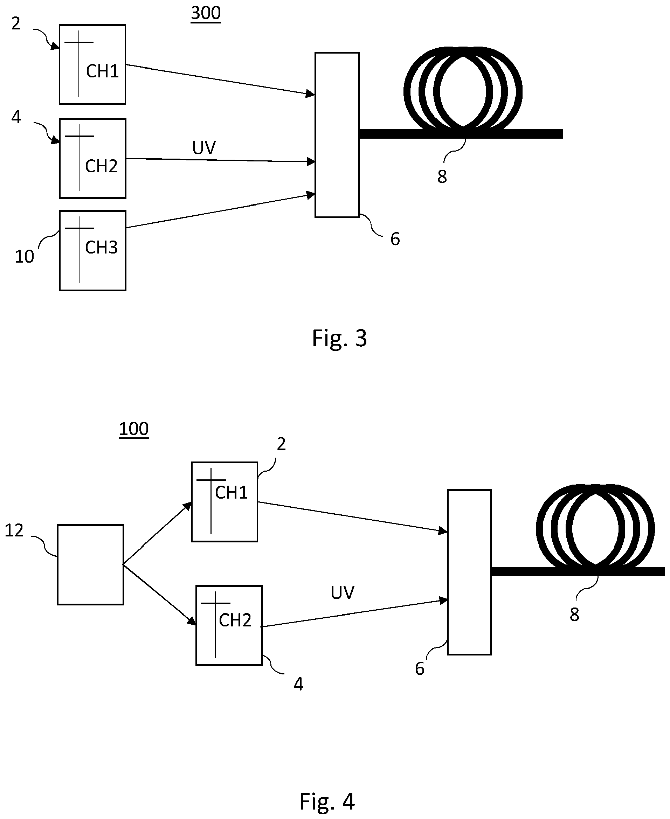

Fig. 3 shows yet another exemplary embodiment of a supercontinuum light source 300 according to the present disclosure. In this example, in addition to the features of the source 100 shown in Fig. 1, the supercontinuum light source 300 comprises the third type of channel 10 configured to generate light having a third spectral distribution. The third spectral distribution differs from the first spectral distribution and from the second spectral distribution. The third type of channel may generate light with a third spectral having a higher power spectral density in the IR spectral region than the first spectral distribution generated in the first type of channel. On the other hand, the first spectral distribution may have a higher power spectral density in the visible spectral region than the third spectral distribution. Optionally, the supercontinuum source 300 may comprise a fourth type of channel (not shown), configured to generate light having a fourth spectral distribution. The fourth spectral distribution differs from the first spectral distribution and from the second spectral distribution as well as from the third spectral distribution.

Fig. 4 shows one exemplary implementation of the supercontinuum light source of Fig. 1. In this example, the supercontinuum light source comprises a pump pulse source 12 configured to provide pump pulses for both the first and the second type of channels. Each channel is configured to receive the pump pulses from the pump pulse source 12. The pump pulse source may be seen as forming part of both the first type of channel and the second type of channel 4. The channels further comprise optical components for modifying the pulse duration of or reshaping the spectrum of the pump pulse source 12.

In another implementation (not shown), each channel may receive pump light from an individual laser (CW or pulsed). If there are three channels, various implementation are possible, e.g. (1) there may be provided three separate pump sources for each of the channels, (2) there may be provided one common pump source for the first and the second type of channel and there may be provided an additional pump source for the third channel; (3) there may be provided one common pump source for the first and the third type of channel and there may be provided an additional pump source for the second type channel; and (4) there may be provided one common pump source for the third and the second type of channel and there may be provided an additional pump source for the first channel;

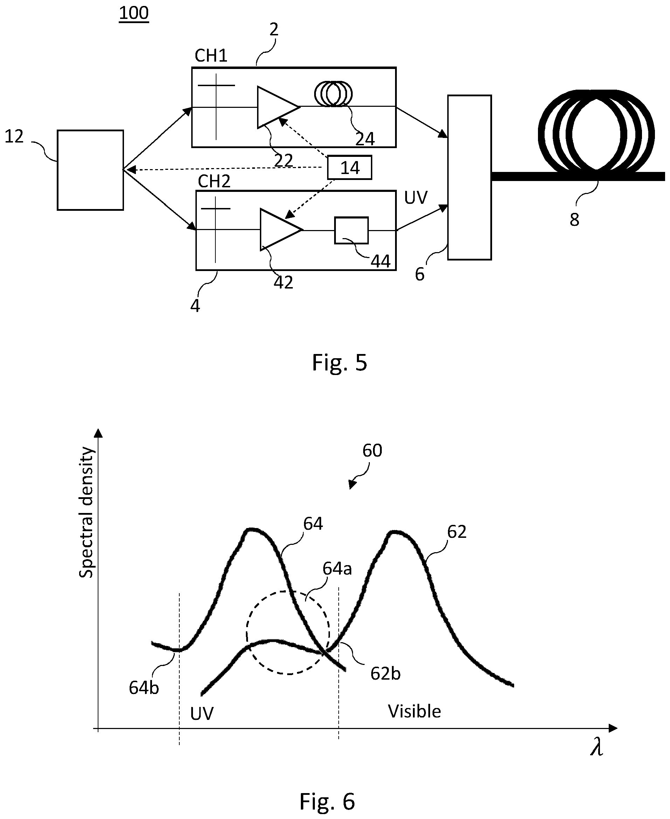

Fig. 5 shows detailed implementation of the supercontinuum light source 100 of Fig. 1. according to one example of the present disclosure. In this example, the first type of channel 2 comprises an amplifier 22 configured to receive the light from the pump source 12 (CW or pulsed light) and amplify the received light. The amplified light may then be sent to a nonlinear element 24, e.g. a nonlinear fiber, for generating light with a broadband spectral distribution in the first wavelength region. Light of the first type of channel propagates along a first optical path. The second type of channel 4 comprises another amplifier 42 configured to receive the light from the pump source 12 (or alternatively from another laser independent from the pump source 12) and amplify the received light. The amplified light may then be sent to a nonlinear element 44, e.g. a nonlinear crystal, for generating light with a broadband spectral distribution in the second wavelength region. Light of the second type of channel propagates along a second optical path. The beam combiner 8 is configured to combine the light generated in the channels 2 and 4 to form a combined supercontinuum. The beam combiner 8 may comprise a multimode optical output fiber supporting a plurality of spatial modes at one or more wavelengths of the combined supercontinuum (not shown).

The supercontinuum light source may further comprise a control system 14 configured to control the operation of the amplifiers to control amplification provided by the amplifiers 22 and 42 and thereby total power of the light received by the nonlinear elements 24 and 44. In this way, the spectral distribution of the light generated in the nonlinear elements is controlled. Alternatively or additionally, the control system 14 may be configured to control the pump source 12 and to manipulate the output pump light (e.g. pulses) in terms of spectral distribution and/or output power. By providing the control system 14 each channel can be controlled to provide light in a specific (desired) wavelength region and/or at a specific intensity.

Fig. 6 shows an exemplary embodiment of the generated supercontinuum 60 according to one example of the present disclosure. The supercontinuum 60 is generated by combining the first spectral distribution 62 from the first type of channel and the second spectral distribution 64 from the second type of channel. In this example, the first spectral distribution 62 comprises wavelengths in the visible spectral range. The second spectral distribution 64 comprises light in the ultraviolet range. It can be seen that the light provided by different channels comprises overlapping spectral components, i.e. the first spectral distribution 62 and the second spectral distribution 64 comprise overlapping spectral components. The second spectral distribution 64 has a higher power spectral density over a part 64a of the ultraviolet spectral range than the first spectral distribution. A second blue edge 64b of the second spectral distribution 64 is blue-shifted by at least 50 nm relative to a first blue edge 62b of the first spectral distribution 62.

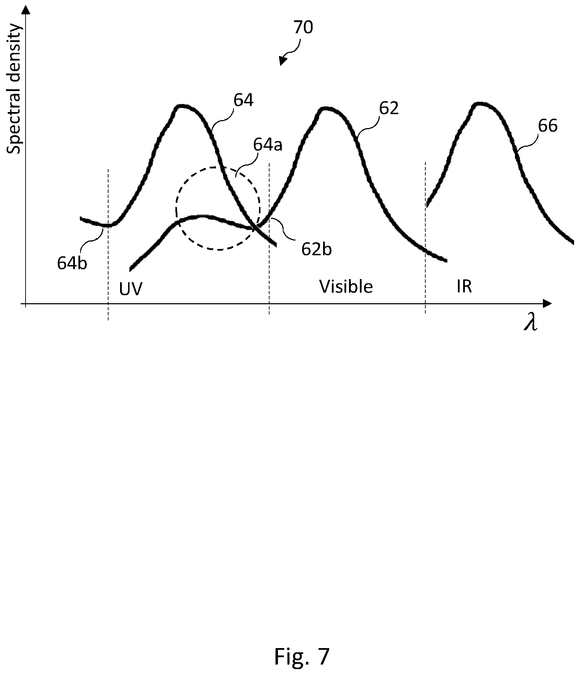

Fig. 7 shows yet another exemplary embodiment of the generated supercontinuum 70 according to one example of the present disclosure. In addition to the first spectral distribution 62 and the second spectral distribution 64, the supercontinuum 70 comprises the third spectral distribution 66 from the third type of channel.

It should be noted that these spectral distributions are purely illustrative and intend to show the main concept of the present disclosure. As elaborated above, the combined supercontinuum may be substantially flat over the entire spectrum.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

Relative terms such as "below" or "above" or "higher" or "lower" may be used herein to describe a relationship of one value to another value. It will be understood that when an element is referred to as being "connected" or "coupled" to another component, it can be directly connected or coupled to the other component, or intervening components may be present. In contrast, when a component is referred to as being "directly connected" or "directly coupled" to another component, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

### List of items

1. A supercontinuum light source comprising:
   one or more pump pulse sources;
   a first type of channel configured to generate light having a first spectral distribution in response to a pump pulse propagating along a first optical path of the first type of channel;
   a second type of channel configured to generate light having a second spectral distribution in response to a pump pulse propagating along a second optical path of the second type of channel;
   a beam combiner configured to combine the light generated in the channels to form a combined supercontinuum; and
   a multimode optical output fiber arranged to receive the combined supercontinuum from the beam combiner, the multimode optical output fiber supporting a plurality of spatial modes at one or more wavelengths of the combined supercontinuum;
   wherein the second spectral distribution has a higher spectral density in the ultraviolet spectral range than the first spectral distribution.
2. The supercontinuum light source according to item 1, comprising one or more optical amplifiers arranged to receive and amplify pump pulses provided by the one or more pump pulse sources.
3. The supercontinuum light source according to item 1 or 2, wherein at least one of the channel comprises a nonlinear optical element, such as a nonlinear optical fiber, configured to generate light having a spectral distribution in response to a pump pulse propagating through the nonlinear element.
4. The supercontinuum light source according to item 3, wherein the first type of channel comprises a first nonlinear optical element and the second type of channel comprises a second nonlinear optical element, wherein the first nonlinear optical element is different from the second nonlinear optical element.
5. The supercontinuum light source according to any of the preceding items, wherein different or identical pump pulses propagate along the first and second optical paths.
6. The supercontinuum light source according to any of the preceding items, wherein the first type of channel comprises a first non-linear optical element, such as a first non-linear optical fiber, configured to generate the light having a first spectral distribution in response to a pump pulse propagating through the first nonlinear element and/or wherein the second type of channel comprises a second non-linear optical element, such as second non-linear optical fiber, configured to generate the light having a second spectral distribution in response to a pump pulse propagating through the second nonlinear element.
7. The supercontinuum light source according to any of the preceding items, wherein a blue edge of the second spectral distribution is blue-shifted by at least 5 nm, such as by at least 10 nm, such as by at least 20 nm relative to a blue edge of the first spectral distribution.
8. The supercontinuum light source according to any of the preceding items, wherein the first spectral distribution comprises light in the visible spectral range and in the mid-infrared spectral range.
9. The supercontinuum light source according to any of the preceding items, comprising a third type of channel configured to generate light having a third spectral distribution in response to a pump pulse propagating along a third optical path of the third type of channel.
10. The supercontinuum light source according to the preceding items, wherein a red edge of the third spectral distribution is red-shifted by at least 50 nm, such as by at least 100 nm, such as by at least 500 nm relative to a red edge of the spectral distribution.
11. The supercontinuum light source according to item 9 or 10, wherein the third spectral distribution covers at least part of the infra-red spectral range.
12. The supercontinuum light source according to any of the preceding items, wherein at least one of the optical paths comprises a pump source, such as a pump pulse source.
13. The supercontinuum light source according to any of the preceding items, wherein at least one of the optical paths comprises an amplifier arranged to receive and amplify pump pulses.
14. The supercontinuum light source according to any of the preceding items, comprising two or more of the second type of channel.
15. The supercontinuum light source according to the preceding item, wherein the two or more of the second type of channels provide second spectral distributions covering different parts of the ultraviolet spectral range.
16. The supercontinuum light source according to any of the preceding items, wherein at least one of the optical paths output a beam into free space.
17. The supercontinuum light source according to any of the preceding items, wherein the beam combiner comprises at least one lens or a bundle of fibers.
18. The supercontinuum light source according to the previous item, wherein the at least one lens is configured to receive the output light from one or more and preferably from all optical paths and further configured to couple the received output light into the multimode fiber.
19. The supercontinuum light source according to item 17 or 18, wherein the bundle of fibers is configured to receive the output light from the optical paths and further configured to couple the received light into the multimode fiber.
20. The supercontinuum light source according to any of the preceding items, wherein at least the second optical path comprises a second or higher harmonic generation component arranged to generate light in the ultra-violet range in response to an optical pulse propagating in the second optical path and wherein, optionally, the second or higher harmonic generation component comprises a crystal in free-space, wherein the optical path outputs a beam into free-space, which is guided to and preferably focused on the crystal.
21. The supercontinuum light source according to any of the preceding items, wherein the first and second spectral distributions comprise overlapping spectral components and/or wherein the second and third spectral distributions comprise overlapping spectral components.
22. The supercontinuum light source according to any of the preceding items, wherein each optical path is arranged to provide light in a specific wavelength range and/or at a specific intensity.
23. The supercontinuum light source according to any of the preceding items, comprising at least a fourth type of channel being configured to generate light having a fourth spectral distribution, where the fourth spectral distribution differs from the first, second and third spectral distribution.
24. The supercontinuum light source according to item 23, comprising at least a fifth type of channel being configured to generate light having a fifth spectral distribution, where the fifth spectral distribution differs from the first, second, third and fourth spectral distribution.
25. The supercontinuum light source according to item 23 or 24, where the first, third, fourth and fifth spectral distributions all contain light in the visible or infrared range.

### Reference signs

- 100-300: supercontinuum light source
- 2: first type of channel
- 4, 4a: second type of channel
- 6: beam combiner
- 8: multimode fiber
- 10: third type of channel
- 12: pump source
- 14: control system
- 22, 42: amplifiers
- 24, 44: nonlinear elements
- 60, 70: supercontinuum
- 62: first spectral distribution
- 62b: first blue edge
- 64: second spectral distribution
- 64a: a part of the ultraviolet spectral range
- 64b: second blue edge
- 66: third spectral distribution

## Claims

1. A supercontinuum light source comprising at least a first type of channel and a second type of channel, a beam combiner, and a multimode fiber, the first type of channel is configured to generate light having a first spectral distribution, the second type of channel being configured to generate light having a second spectral distribution comprising light in the ultraviolet range, where the second spectral distribution has a higher power spectral density at least over part of the ultraviolet spectral range than the first spectral distribution, the beam combiner being configured to couple the light generated in the channels into the multimode fiber.

2. The supercontinuum light source according to claim 1, comprising two or more channels of the second type, and
wherein a blue edge of the second spectral distribution is blue-shifted by at least 5 nm, such as by at least 10 nm, such as by at least 20 nm relative to a blue edge of the first spectral distribution, and
wherein the light provided by different channels comprises overlapping spectral components.

3. The supercontinuum light source according to claim 1 or 2, wherein the first spectral distribution comprises light in the visible spectral range, such as light with a power spectral density above 0.1 mW/nm at least over part of the visible spectral range, and
wherein the second spectral distribution has a power spectral density above 0.01 mW/nm at least over part of the ultraviolet spectral range.

4. The supercontinuum light source according to any of the preceding claims, comprising at least a third type of channel being configured to generate light having a third spectral distribution, wherein the third spectral distribution differs from the first spectral distribution and from the second spectral distribution, and.
wherein the third spectral distribution comprises light in the infrared range, such as light with a power spectral density above 0.1 mW/nm at least over part of the infrared spectral range.

5. The supercontinuum light source according to any of the preceding claims, further comprising a pump source, such as a pump pulse source configured to provide pump pulses, for at least one of the channels, and wherein the corresponding channel is configured to receive the pump pulses from the pump pulse source.

6. The supercontinuum light source according to any of the preceding claims, wherein at least one of the channels comprises a pump source, such as a pump pulse source.

7. The supercontinuum light source according to any of the preceding claims, wherein at least one channel comprises an amplifier for generating amplified pulses.

8. The supercontinuum light source according to any of the preceding claims, wherein at least one channel comprises a nonlinear element, such as a nonlinear optical fiber for generating light with a broadband spectral distribution.

9. The supercontinuum light source according to any of the preceding claims, wherein the beam combiner comprises at least one lens or a bundle of fibers.

10. The supercontinuum light source according to claim 9, wherein the at least one lens is configured to receive the output light from one or more channels and further configured to couple the received output light into the multimode fiber.

11. The supercontinuum light source according to claim 9, wherein the bundle of fibers is configured to receive the output light from the channels and further configured to couple the received light into the multimode fiber.

12. The supercontinuum light source according to any of the preceding claims, wherein at least one of the second type of channels comprises a second or higher harmonic generation component for generating light in the ultra-violet range, wherein, optionally, the second or higher harmonic generation component comprises a crystal in free-space, wherein the at least one channel outputs a beam into free-space, which is guided to and preferably focused on the crystal.

13. The supercontinuum light source according to any of the preceding claims configured to output light from the multimode fiber with a spectrum extending from 380 nm to 2500 nm, such as with a spectrum extending from 390 nm to 740 nm, and
wherein the spectrum of the supercontinuum light source has a spectral width of at least 300 nm.

14. The supercontinuum light source according to any of the preceding claims, comprising at least a fourth type of channel being configured to generate light having a fourth spectral distribution, where the fourth spectral distribution differs from the first, second and third spectral distribution.

15. The supercontinuum light source according to any of the claims 8-14, comprising a control system configured to control the operation of at least one of the pump pulse sources and/or at least one of the amplifiers to control the pump pulses received by at least one of the nonlinear elements to provide control over the spectral distribution or intensity of the light generated in the nonlinear element
